# EUROPÄISCHE PATENTSCHRIFT

(11) **EP 0 491 210 B1**
(45) Veröffentlichungstag und Bekanntmachung des Hinweises auf die Patenterteilung: **20.03.1996**
(21) Anmeldenummer: 91120632.4
(22) Anmeldetag: 30.11.1991
(51) Int. Cl.: G01K 17/00, G01J 1/42, G01J 5/00, G01J 5/48

(54) **Intensitätsdetektor**
Intensity detector
Détecteur d'intensité

(30) Priorität: 15.12.1990 DE 4040168
(43) Veröffentlichungstag der Anmeldung: 24.06.1992
(73) Patentinhaber: DEUTSCHE FORSCHUNGSANSTALT FÜR LUFT- UND RAUMFAHRT e.V., D-53111 Bonn (DE)
(72) Erfinder: Schnee, Peter, W-7000 Stuttgart 80 (DE); Schock, Wolfram Dr. Ing., W-7030 Böblingen (DE)
(74) Vertreter: Beck, Jürgen

(56) Entgegenhaltungen:
- US-A- 4 329 583
- JOURNAL OF PHYSICS E. SCIENTIFIC INSTRUMENTS, Bd. 22, Nr. 12, Dezember 1989, ISHING, BRISTOL, GB, Seiten 1034-1036; N.C. KERR ET AL.: 'Single pulse two-dimentional CO2 laser beam profifing'
- JOURNAL OF PHYSICS E. SCIENTIFIC INSTRUMENTS, Bd. 20, Nr. 4, April 1987, ISHING, BRISTOL, GB, Seiten 458-461; A.A. MELNNES ET AL.: 'A novel method for spatial profiling of laser beams'
- APPLIED OPTICS, Bd. 10, Nr. 1, Januar 1971, NEW YORK, US, Seiten 132-135; M.M. BIRKY: 'Calorimeter for Laser Energy Measurements'
- PATENT ABSTRACTS OF JAPAN vol. 11, no. 9 (P-534)(2456) 10. Januar 1987 & JP-A-61 186 825

## Beschreibung

Die Erfindung betrifft einen Intensitätsdetektor für einen Laserstrahl aus einem Hochleistungslaser, umfassend einen sich in einer quer zu der Ausbreitungsrichtung des Laserstrahls erstreckenden Ebene angeordnetes infrarotabsorbierendes Detektormaterial. Ein derartiger Detektor ist aus US-A-4 329 583 bekannt.

Als Intensitätsdetektor, insbesondere für eine zweidimensionale Abschätzung der Intensitätsverteilung des Laserstrahls, sind Detektoren verfügbar, die aus einer Vielzahl von Einzelelementen in Matrixanordnung bestehen oder ein Einzelelement mit einer Scanning-Einrichtung kombinieren und die Signale dieser Detektoren elektronisch auswerten. Diese Systeme sind aufwendig und teuer und erfordern, daß vor diesen ein Abschwächer für den Laserstrahl angeordnet ist.

Darüber hinaus ist es bekannt, Blöcke aus geschäumtem Graphit zu verwenden und diese mit dem Laserstrahl zu bestrahlen. Mit diesen Blöcken aus Graphit ist eine Grobabschätzung der Intensitätsverteilung zum Justieren des Lasers möglich. Nachteilig ist der rasche Abbrand der Blöcke.

Der Erfindung liegt daher die Aufgabe zugrunde, einen Intensitätsdetektor der gattungsgemäßen Art derart zu verbessern, daß mit einfachen Mitteln eine Erfassung der Intensitätsverteilung, insbesondere eine zweidimensionale Abschätzung der Intensitätsverteilung quer zur Ausbreitungsrichtung, möglich ist, bei großer Standzeit des Detektors.

Diese Aufgabe wird bei einer Intensitätsdetektion der eingangs beschriebenen Art erfindungsgemäß dadurch gelöst, daß das Detektormaterial bei Infrarotanregung intensitätsabhängig und im wesentlichen materialerhaltend in einem nahen-Infrarot oder sichtbaren Spektralbereich zum Leuchten bringbar ist und daß das Detektormaterial in der Ebene in einem Raster mit als Durchtrittsöffnungen für einen Teil des Laserstrahls ausgebildeten Zwischenräumen angeordnet ist.

Der Vorteil der erfindungsgemäßen Anordnung ist darin zu sehen, daß durch die Wahl des Detektormaterials eine Abschätzung der Intensitätsverteilung in der Ebene quer zur Ausbreitungsrichtung des Laserstrahls möglich ist und daß durch die als Durchtrittsöffnungen für einen Teil des Laserstrahls ausgebildeten Zwischenräume die Belastung des Detektormaterials dadurch verringert wird, daß ein Teil der Laserstrahlung nicht auf das Detektormaterial trifft, sondern durch die Zwischenräume hindurchtritt. Dadurch ist es möglich, den Laserstrahl von Hochleistungslasern direkt ohne einen dazwischengeschalteten Abschwächer zu erfassen.

Im Rahmen der erfindungsgemäßen Lösung wäre es ausreichend, wenn das Detektormaterial im nahen Infrarotbereich emittiert, so daß beispielsweise die Beobachtung des Leuchtens des Detektormaterials mittels einer Wärmebildkamera möglich ist. Noch vorteilhafter ist es jedoch, wenn das Detektormaterial im sichtbaren Spektralbereich zum Leuchten bringbar ist, da dann eine Abschätzung der Intensitätsverteilung des Laserstrahls mit dem bloßen Auge möglich ist.

Eine besonders vorteilhafte Variante des Detektormaterials sieht vor, daß das Detektormaterial als Temperatur-Strahler zum Leuchten bringbar ist.

Um das Detektormaterial in einem Raster mit Zwischenräumen anzuordnen, ist bei einer Lösung eine Anordnung des Detektormaterials auf einer Stützstruktur vorgesehen.

Hierzu erstreckt sich zweckmäßigerweise die Stützstruktur in der Ebene.

Um zu verhindern, daß durch Wärmeleitungseffekte die unterschiedliche Intensitätsverteilung des Laserstrahls quer zur Ausbreitungsrichtung verwischt wird, ist günstigerweise die Stützstruktur so ausgebildet, daß sie eine geringe Wärmeleitfähigkeit in Richtung quer zur Ausbreitungsrichtung des Laserstrahls aufweist.

Darüber hinaus ist es, insbesondere um zeitabhängige Änderungen in der Intensitätsverteilung zu erfassen, günstig, wenn das Detektormaterial und/oder die Stützstruktur eine geringe Wärmekapazität aufweisen, so daß das intensitätsabhängige Leuchten des Detektormaterials mit geringer Verzögerung erfolgt.

Ein besonders zweckmäßiges Ausführungsbeispiel sieht vor, daß die Stützstruktur ein regelmäßiges Raster aufweist, so daß unabhängig vom Ort des Auftreffens des Laserstrahls auf dem Detektormaterial die gleiche Auflösung erreichbar ist.

Im einfachsten Fall ist vorgesehen, daß die Stützstruktur ein Gitter ist.

Besonders vorteilhaft ist eine Lösung, bei welcher die Stützstruktur aus dem Detektormaterial gebildet ist.

Im Rahmen der bislang beschriebenen Ausführungsbeispiele wurde der Vorteil der Zwischenräume zwischen dem Detektormaterial darin gesehen, daß dadurch von dem Detektormaterial lediglich ein Teil der Laserstrahlung absorbiert wird und ein anderer dieses nicht belastet. Ergänzend dazu lassen sich die Zwischenräume noch weiter vorteilhaft dadurch nutzen, daß die Zwischenräume von einem kühlenden Medium durchströmt sind.

Damit ist bei einem weiteren vorteilhaften Ausführungsbeispiel der erfindungsgemäßen Lösung die Möglichkeit geschaffen, mittels Regelung des Durchflusses des kühlenden Mediums durch die Zwischenräume die Temperatur des Detektormaterials einzustellen, so daß, insbesondere bei einem Temperatur-Strahler, auch die Intensität des im sichtbaren Spektralbereichs emittierten Lichts einstellbar ist.

Vorzugsweise handelt es sich bei dem kühlenden Medium um ein Gas, im einfachsten Fall um Luft.

Die erfindungsgemäße Kühlung des Detektormaterials ist insbesondere dann vorteilhaft, wenn das Detektormaterial zu einer Beobachtungsseite hin durchströmt ist.

Besonders zweckmäßig ist es, wenn das Detektormaterial von einer Rückseite zur Beobachtungsseite hin durchströmt ist. Bei der Erläuterung der bislang beschriebenen Ausführungsformen der erfindungsgemäßen Lösung wurde nicht im einzelnen darauf eingegangen, auf welcher Seite des Detektormaterials der Laserstrahl auftrifft und von welcher Seite des Detektormaterials beobachtet wird. Besonders zweckmäßig ist es, wenn der zu erfassende Laserstrahl auf der Beobachtungsseite des Detektormaterials auftrifft, da dann alle Wärmeleitungseffekte und andere parasitären Effekte, welche das intensitätsabhängige Leuchten des Detektormaterials verfälschen könnten, minimal sind.

Aus Sicherheitsgründen und um zu verhindern, daß der durch die Zwischenräume hindurchgetretene Teil des Laserstrahls wiederum auf das Detektormaterial trifft und dieses zusätzlich thermisch belastet und in einer die Abschätzung des Laserstrahls verfälschenden Weise wirkt, ist vorzugsweise auf der Rückseite des Detektormaterials ein Sumpf für den durch dieses hindurchtretenden Teil des Laserstrahls angeordnet.

Vorzugsweise ist dies konstruktiv so gelöst, daß der Sumpf eine Öffnung aufweist, in deren Öffnungsebene das Detektormaterial angeordnet ist.

Im einfachsten Fall ist der Sumpf als Hohlkörper mit infrarotabsorbierenden Wandflächen ausgebildet.

Um zusätzlich die Absorption zu verbessern und ein übermäßiges Aufheizen der Wandflächen zu verhindern, ist vorgesehen, daß die infrarotabsorbierenden Wandflächen gekühlt sind.

Die Wirkung des Sumpfes ist besonders gut und die Rückreflexion des eintretenden Teil des Laserstrahls wird besonders vorteilhaft dann verhindert, wenn der Sumpf einen von dem eintretenden Teil des Laserstrahls beaufschlagten Reflektor aufweist.

Eine konstruktiv vorteilhafte Ausführungsform des Reflektors sieht vor, daß dieser kegelförmig angeordnete Reflektorflächen aufweist.

Im einfachsten Fall sind Detektormaterial und Stützstruktur aus demselben Werkstoff ausgebildet. Vorzugsweise werden das Detektormaterial und die Stützstruktur durch ein Metallgitter gebildet.

Ein weiteres vorteilhaftes Ausführungsbeispiel sieht vor, daß Detektormaterial und Stützstruktur aus einer Keramikplatte gebildet sind.

Diese Keramikplatte weist insbesondere ein Raster von Durchbrüchen auf, so daß Keramikstege zwischen den Durchbrüchen das Detektormaterial und die Stützstruktur bilden. Eine zweckmäßige Weiterbildung sieht eine regelmäßige Anordnung der Durchbrüche vor.

Das Keramikmaterial ist vorzugsweise ein einfach herzustellendes poröses Keramikmaterial, insbesondere eine Silikatanteile aufweisende Keramik oder eine Glaskeramik oder Keramik aus Al₂O₃.

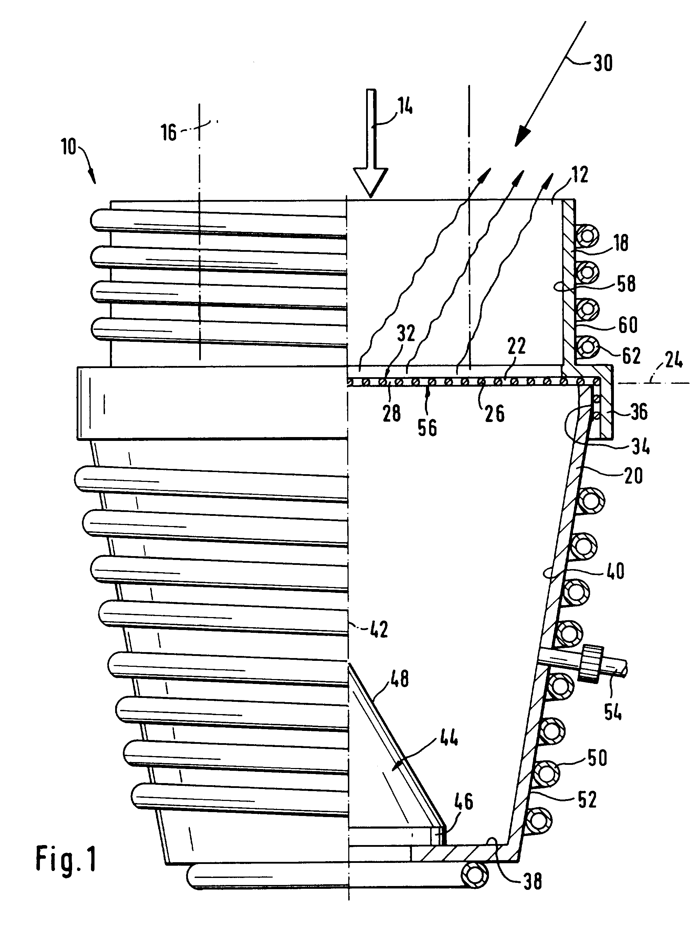

Weitere Merkmale und Vorteile der Erfindung sind Gegenstand der nachfolgenden Beschreibung sowie der zeichnerischen Darstellung eines Ausführungsbeispiels. Die Zeichnung zeigt
eine halbseitig geschnittene Seitenansicht eines erfindungsgemäßen Intensitätsdetektor.

Ein Ausführungsbeispiel eines erfindungsgemäßen Intensitätsdetektors, dargestellt in der Figur, umfaßt ein als Ganzes mit 10 bezeichnetes Gehäuse mit einer vorderen Öffnung 12, in welche ein sich in einer Ausbreitungsrichtung 14 ausbreitender Laserstrahl 16 eintritt.

Das Gehäuse 10 umfaßt einen sich an die Öffnung 12 anschließenden Ring 18, welcher auf einem Gehäusebecher 20 sitzt.

Der durch den Ring 18 hindurchtretende Laserstrahl 16 trifft auf ein an der der Öffnung 12 gegenüberliegenden Seite des Rings 18 angeordnetes Gitter 22 aus einem Detektormaterial, welches sich in einer Ebene 24 erstreckt, die senkrecht zur Ausbreitungsrichtung 14 des Laserstrahls 16 verläuft.

Das Gitter 22 ist seinerseits vorzugsweise aus Metalldrähten 26 geflochten, welche in konstanten Abständen parallel zueinander verlaufen, so daß sich zwischen den Metalldrähten 26 Zwischenräume 28 bilden.

Die Metalldrähte 26 sind ihrerseits aus einem Material gewählt, welches bei Infrarotanregung intensitätsabhängig und im wesentlichen materialerhaltend in einem kurzwelligen Spektralbereich zum Leuchten bringbar ist. Vorzugsweise ist dieser kurzwellige Spektralbereich der sichtbare Spektralbereich, in welchem die Metalldrähte mit dem Spektrum eines Temperatur-Strahlers leuchten.

Darüber hinaus sind die Metalldrähte 26 so gewählt, daß eine möglichst geringe Wärmeleitung in der Ebene 24, das heißt quer zur Ausbreitungsrichtung 14, erfolgt, so daß die dem vom Laserstrahl 16 angestrahlten Bereiche der Metalldrähte 26 entsprechend der auftreffenden Intensität leuchten.

Dadurch ist die Abschätzung der Intensitätsverteilung des Laserstrahls 16 in der Ebene 24 möglich. Hierzu wird von einer Beobachtungsrichtung 30, welche in einem spitzen Winkel zur Ausbreitungsrichtung des Laserstrahls 16 verläuft, eine der Öffnung 12 des Rings 18 zugewandte Beobachtungsseite 32 betrachtet. Die Betrachtung der Beobachtungsseite 32 kann entweder unmittelbar durch das menschliche Auge erfolgen oder aber auch, sofern keine ausreichende Emission im sichtbaren Spektralbereich erfolgt, mittels einer Wärmebildkamera.

Aus Sicherheitsgründen und um eine Rückreflexion des durch die Zwischenräume 28 hindurchtretenden Teils des Laserstrahls zu vermeiden, schließt sich an das Gitter 22 auf der dem Ring 18 gegenüberliegenden Seite der Gehäusebecher 20 an. Der Ring 18 und der Gehäusebecher 20 bilden dabei gleichzeitig eine Aufnahme für das Gitter 22. Hierzu ist der Ring 18 mit einem einen Becherrand 34 übergreifenden Ringflansch 36 versehen, so daß zwischen dem Becherrand 34 und dem Ringflansch 36 das Gitter 22 in der Ebene 24 gespannt einklemmbar ist.

Der Gehäusebecher 20 umfaßt seinerseits einen Boden 38 und sich von diesem ausgehend bis zum Becherrand 34 erstreckende Seitenwände 40, welche gegenüber einer Mittelachse 42 des Gehäusebechers 20, die vorzugsweise parallel zur Ausbreitungsrichtung 14 verläuft, in einem spitzen Winkel geneigt sind, wobei die Seitenwände, ausgehend vom Boden 38 zum Becherrand 34 hin, ihren Abstand von der Mittelachse 42 vergrößern.

Der durch das Gitter 22 hindurchtretende Teil des Laserstrahls 16 wird an dem Gitter 22 gebeugt, wobei der in die höheren Beugungsordnungen gebeugte Anteil auf den Gehäusebecher 20, insbesondere dessen Seitenwände 40 trifft und der in nullter Ordnung gebeugte Anteil auf einen auf dem Boden 38 koaxial zu der Mittelachse 42 angeordneten Reflektor 44 trifft, welcher die Form eines Kegels aufweist, der mit einer Grundfläche 46 auf dem Boden 38 sitzt und mit seiner Kegelmantelfläche 48 einen spitzen Winkel mit der Mittelachse 42 aufweist, die gleichzeitig die Kegelachse des Reflektors 44 darstellt.

Die Größe des Reflektors 44 ist vorzugsweise so gewählt, daß sich dieser über die gesamte Ausdehnung des in den Gehäusebecher 20 in nullter Ordnung eintretenden Anteils des Laserstrahls 16 senkrecht zur Mittelachse 42 erstreckt, so daß dieser Anteil des Laserstrahls 16 von den Kegelmantelflächen zu den Seitenwänden 40 reflektiert wird. Sowohl die Kegelmantelflächen 48 als auch die Seitenwände 40 sowie der Boden 38, insoweit als er nicht von dem Reflektor 44 überdeckt ist, sind mit einem infrarotabsorbierenden Material beschichtet, so daß die gesamte auf die Kegelmantelfläche 48 auftreffende Infrarotstrahlung entweder von dieser oder von dem Boden 38 oder den Seitenwänden 40 absorbiert wird und nicht wieder auf das Gitter 22 zurückreflektiert wird.

Zur Kühlung der Seitenwände 40 und des Bodens 38 sind diese von Kühlschlangen 50 umgeben, die beispielsweise auf einer Außenseite 52 des Gehäusebechers 20 mit gutem Wärmekontakt angeordnet sind.

Eine Kühlung des Gitters 22 erfolgt mittels durch die Zwischenräume 28 hindurchtretender und die Metalldrähte 26 jeweils umströmender Luft, welche über einen Einblasstutzen 54 in den Gehäusebecher 20 eingeblasen wird und dann das Gitter 22 von seiner dem Gehäusebecher 20 zugewandten Rückseite 56 in Richtung seiner Beobachtungsseite 22 durchströmt, wobei vorzugsweise alle Zwischenräume 28 von derselben Luftmenge durchsetzt sind.

Die Erwärmung des Gitters 22 durch den von diesem absorbierten Teil des Laserstrahls 16 läßt sich durch die die Zwischenräume 28 durchströmende Luftmenge regulieren, so daß sich dadurch auch im Falle des als Temperatur-Strahler strahlenden Gitters 22 die Intensität des im sichtbaren Spektralbereich emittierten Lichts einstellen läßt, so daß eine Anpassung an die Beobachtungsmöglichkeiten, beispielsweise je nach dem, ob eine Wärmebildkamera oder unmittelbar das Auge zur Beobachtung dienen, erfolgen kann.

Der Ring 18 dient dazu, von dem Gitter 22 durch Beugung des Laserstrahls in Reflexion ausgehende Anteile zu absorbieren, so daß der Ring 18 ebenfalls auf seiner Ringinnenseite 58 mit infrarotabsorbierendem Material versehen und auf seiner Ringaußenseite 60 durch Kühlschlangen 62 gekühlt ist.

Vorzugsweise sind die Kühlschlangen 50 und 62 mit einem Kühlmedium, insbesondere Wasser, durchströmt.

Bei einem weiteren Ausführungsbeispiel ist vorgesehen, anstelle des Gitters 22 eine Platte aus Keramikmaterial zu verwenden, die in regelmäßigem Muster angeordnete Durchbrüche aufweist, welche den Zwischenräumen 28 entsprechen.

Das Keramikmaterial ist dabei vorzugsweise ein poröses Keramikmaterial. Im einfachsten Fall ist die Platte aus Keramikmaterial, wie sie in gasbetriebenen Wärmestrahlern Verwendung findet.

## Patentansprüche

1. Intensitätsdetektor für einen Laserstrahl aus einem Hochleistungslaser, umfassend ein in einer sich quer zu der Ausbreitungsrichtung des Laserstrahls erstrekkenden Ebene angeordnetes infrarotabsorbierendes Detektormaterial,
**dadurch gekennzeichnet**,
daß das Detektormaterial (26) bei Infrarotanregung intensitätsabhängig und im wesentlichen materialerhaltend in einem nahen-Infrarot oder sichtbaren Spektralbereich zum Leuchten bringbar ist und daß das Detektormaterial (26) in der Ebene (24) in einem Raster mit als Durchtrittsöffnungen für einen Teil des Laserstrahls (16) ausgebildeten Zwischenräumen (28) angeordnet ist.

2. Intensitätsdetektor nach Anspruch 1, dadurch gekennzeichnet, daß das Detektormaterial (26) im sichtbaren Spektralbereich zum Leuchten bringbar ist.

3. Intensitätsdetektor nach Anspruch 2, dadurch gekennzeichnet, daß das Detektormaterial (26) als Temperatur-Strahler zum Leuchten bringbar ist.

4. Intensitätsdetektor nach einem der voranstehenden Ansprüche, dadurch gekennzeichnet, daß das Detektormaterial (26) auf einer Stützstruktur (22) angeordnet ist.

5. Intensitätsdetektor nach Anspruch 4, dadurch gekennzeichnet, daß sich die Stützstruktur (22) in der Ebene (24) erstreckt.

6. Intensitätsdetektor nach Anspruch 4 oder 5, dadurch gekennzeichnet, daß die Stützstruktur (22) eine geringe Wärmeleitfähigkeit in Richtung quer zur Ausbreitungsrichtung (14) des Laserstrahls aufweist.

7. Intensitätsdetektor nach einem der Ansprüche 4 bis 6, dadurch gekennzeichnet, daß das Detektormaterial und/oder die Stützstruktur (22) eine geringe Wärmekapazität aufweisen.

8. Intensitätsdetektor nach einem der Ansprüche 4 bis 7, dadurch gekennzeichnet, daß die Stützstruktur (22) ein regelmäßiges Raster aufweist.

9. Intensitätsdetektor nach einem der Ansprüche 4 bis 8, dadurch gekennzeichnet, daß die Stützstruktur ein Gitter (22) ist.

10. Intensitätsdetektor nach einem der Ansprüche 4 bis 9, dadurch gekennzeichnet, daß die Stützstruktur (22) aus dem Detektormaterial gebildet ist.

11. Intensitätsdetektor nach einem der voranstehenden Ansprüche, dadurch gekennzeichnet, daß die Zwischenräume (28) von einem kühlenden Medium durchströmt sind.

12. Intensitätsdetektor nach Anspruch 11, dadurch gekennzeichnet, daß mittels Regelung des Durchflusses des kühlenden Mediums durch die Zwischenräume (28) die Temperatur des Detektormaterials (26) einstellbar ist.

13. Intensitätsdetektor nach Anspruch 11 oder 12, dadurch gekennzeichnet, daß das kühlende Medium ein Gas ist.

14. Intensitätsdetektor nach einem der Ansprüche 11 bis 13, dadurch gekennzeichnet, daß das Detektormaterial (26) zu einer Beobachtungsseite (32) hin umströmt ist.

15. Intensitätsdetektor nach einem der voranstehenden Ansprüche, dadurch gekennzeichnet, daß der zu erfassende Laserstrahl (16) auf der Beobachtungsseite (32) des Detektormaterials (26) auftrifft.

16. Intensitätsdetektor nach Anspruch 15, dadurch gekennzeichnet, daß auf der Rückseite (56) des Detektormaterials (26) ein Sumpf (20) für den durch dieses hindurchtretenden Teil des Laserstrahls (16) angeordnet ist.

17. Intensitätsdetektor nach Anspruch 16, dadurch gekennzeichnet, daß der Sumpf (20) eine Öffnung aufweist, in deren Öffnungsebene (24) das Detektormaterial (26) angeordnet ist.

18. Intensitätsdetektor nach Anspruch 16 oder 17, dadurch gekennzeichnet, daß der Sumpf ein Hohlkörper (20) mit infrarotabsorbierenden Wandflächen (38, 40) ist.

19. Intensitätsdetektor nach Anspruch 18, dadurch gekennzeichnet, daß die infrarotabsorbierenden Wandflächen (38, 40) gekühlt sind.

20. Intensitätsdetektor nach einem der Ansprüche 16 bis 19, dadurch gekennzeichnet, daß der Sumpf (20) einen von dem eintretenden Teil des Laserstrahls (16) beaufschlagten Reflektor (44) aufweist.

21. Intensitätsdetektor nach Anspruch 20, dadurch gekennzeichnet, daß der Reflektor (44) kegelförmig angeordnete Reflektorflächen (48) aufweist.

22. Intensitätsdetektor nach einem der Ansprüche 4 bis 21, dadurch gekennzeichnet, daß das Detektormaterial (26) und die Stützstruktur (22) aus demselben Werkstoff ausgebildet sind.

23. Intensitätsdetektor nach einem der voranstehenden Ansprüche, dadurch gekennzeichnet, daß das Detektormaterial (26) ein Keramikmaterial ist.

24. Intensitätsdetektor nach Anspruch 23, dadurch gekennzeichnet, daß das Keramikmaterial ein poröses Keramikmaterial ist.

## Claims

1. Intensity detector for a laser beam from a high-power laser comprising an infrared-absorbent detector material arranged in a plane extending transversely to the direction of propagation of the laser beam,
**characterized in that**
with infrared excitation the detector material (26) can be made to emit light in a near-infrared or visible spectral range in an intensity-dependent manner and essentially with conservation of the material, and **in that** the detector material (26) is arranged in the plane (24) in a grid with spaces (28) designed as through-openings for part of the laser beam (16).

2. Intensity detector as defined in claim 1, characterized in that the detector material (26) can be made to emit light in the visible spectral range.

3. Intensity detector as defined in claim 2, characterized in that the detector material (26) can be made to emit light as a thermal radiator.

4. Intensity detector as defined in any one of the preceding claims, characterized in that the detector material (26) is arranged on a supporting structure (22).

5. Intensity detector as defined in claim 4, characterized in that the supporting structure (22) extends in the plane (24).

6. Intensity detector as defined in claim 4 or 5, characterized in that the supporting structure (22) has a low thermal conductivity in the direction transverse to the direction of propagation (14) of the laser beam.

7. Intensity detector as defined in any one of claims 4 to 6, characterized in that the detector material and/or the supporting structure (22) have a low thermal capacity.

8. Intensity detector as defined in any one of claims 4 to 7, characterized in that the supporting structure (22) has a regular grid.

9. Intensity detector as defined in any one of claims 4 to 8, characterized in that the supporting structure is a grating (22).

10. Intensity detector as defined in any one of claims 4 to 9, characterized in that the supporting structure (22) is made of the detector material.

11. Intensity detector as defined in any one of the preceding claims, characterized in that a cooling medium flows through the spaces (28).

12. Intensity detector as defined in claim 11, characterized in that the temperature of the detector material (26) can be set by regulating the flow of the cooling medium through the spaces (28).

13. Intensity detector as defined in claim 11 or 12, characterized in that the cooling medium is a gas.

14. Intensity detector as defined in any one of claims 11 to 13, characterized in that the flow travels around the detector material (26) towards an observation side (32).

15. Intensity detector as defined in any one of the preceding claims, characterized in that the laser beam (16) to be detected impinges on the observation side (32) of the detector material (26).

16. Intensity detector as defined in claim 15, characterized in that a radiation sink (20) is arranged on the rear side (56) of the detector material (26) for the part of the laser beam (16) passing through it.

17. Intensity detector as defined in claim 16, characterized in that the radiation sink (20) has an opening, in the opening plane (24) of which the detector material (26) is arranged.

18. Intensity detector as defined in claim 16 or 17, characterized in that the radiation sink is a hollow body (20) with infrared-absorbent wall surfaces (38, 40).

19. Intensity detector as defined in claim 18, characterized in that the infrared-absorbent wall surfaces (38, 40) are cooled.

20. Intensity detector as defined in any one of claims 16 to 19, characterized in that the radiation sink (20) has a reflector (44) which is acted upon by the incoming part of the laser beam (16).

21. Intensity detector as defined in claim 20, characterized in that the reflector (44) has conically arranged reflector surfaces (48).

22. Intensity detector as defined in any one of claims 4 to 21, characterized in that the detector material (26) and the supporting structure (22) are made of the same material.

23. Intensity detector as defined in any one of the preceding claims, characterized in that the detector material (26) is a ceramic material.

24. Intensity detector as defined in claim 23, characterized in that the ceramic material is a porous ceramic material.

## Revendications

1. Détecteur d'intensité pour un rayon laser émis par un laser de forte puissance, comprenant un matériau de détecteur absorbant l'infrarouge qui est disposé dans un plan qui s'étend transversalement à la direction de propagation du rayon laser, caractérisé par le fait que le matériau de détecteur (26) lorsqu'il est excité par des infrarouges est conduit à émettre de la lumière en fonction de l'intensité et sensiblement sans dégradation du matériau dans un domaine du spectre visible ou de l'infrarouge proche et par le fait que le matériau de détecteur (26) est disposé dans le plan (24) en une grille comportant des intervalles ou des espaces intermédiaires (28) formant des ouvertures de passage pour une fraction du rayon laser (16).

2. Détecteur d'intensité selon la revendication 1, caractérisé par le fait que le matériau de détecteur (26) est conduit à émettre de la lumière dans le domaine visible du spectre.

3. Détecteur d'intensité selon la revendication 2, caractérisé par le fait que le matériau de détecteur (26) est conduit à émettre de la lumière en tant que radiateur thermique.

4. Détecteur d'intensité selon l'une des revendications précédentes, caractérisé par le fait que le matériau de détecteur (26) est disposé sur une structure de support (22).

5. Détecteur d'intensité selon la revendication 4, caractérisé par le fait que la structure de support (22) s'étend dans le plan (24).

6. Détecteur d'intensité selon la revendication 4 ou la revendication 5, caractérisé par le fait que la structure de support (22) présente une faible conductibilité thermique transversalement à la direction de propagation (14) du rayon laser.

7. Détecteur d'intensité selon l'une des revendications 4 à 6, caractérisé par le fait que le matériau de détecteur et/ou la structure de support (22) présente(nt) une faible capacité thermique.

8. Détecteur d'intensité selon l'une des revendications 4 à 7, caractérisé par le fait que la structure de support (22) se présente en grille régulière.

9. Détecteur d'intensité selon l'une des revendications 4 à 8, caractérisé par le fait que la structure de support est un réseau (22).

10. Détecteur d'intensité selon l'une des revendications 4 à 9, caractérisé par le fait que la structure de support (22) est réalisée à partir du matériau de détecteur.

11. Détecteur d'intensité selon l'une des revendications précédentes, caractérisé par le fait que les espaces (28) intermédiaires sont traversés par un milieu réfrigérant.

12. Détecteur d'intensité selon la revendication 11, caractérisé par le fait que la température du matériau de détecteur (26) peut être réglée par régulation du débit de milieu réfrigérant à travers les espaces (28) intermédiaires.

13. Détecteur d'intensité selon la revendication 11 ou la revendication 12, caractérisé par le fait que le milieu réfrigérant est un gaz.

14. Détecteur d'intensité selon l'une des revendications 11 à 13, caractérisé par le fait que le matériau de détecteur (26) est balayé en direction d'une face d'observation (32).

15. Détecteur d'intensité selon l'une des revendications précédentes, caractérisé par le fait que le rayon laser (16) à mesurer frappe la face d'observation (32) du matériau de détecteur (26).

16. Détecteur d'intensité selon la revendication 15, caractérisé par le fait qu'un dissipateur (20), pour la fraction du rayon laser (16) traversant le matériau de détecteur (26), est disposé sur la face arrière (56) du matériau de détecteur (26).

17. Détecteur d'intensité selon la revendication 16, caractérisé par le fait que le dissipateur (20) comporte une ouverture dans le plan (24) de laquelle est placé le matériau de détecteur (26).

18. Détecteur d'intensité selon la revendication 16 ou la revendication 17, caractérisé par le fait que le dissipateur est un corps creux (20) avec des parois (38, 40) absorbant l'infrarouge.

19. Détecteur d'intensité selon la revendication 18, caractérisé par le fait que les parois (38, 40) absorbant l'infrarouge sont refroidies.

20. Détecteur d'intensité selon l'une des revendications 16 à 19, caractérisé par le fait que le dissipateur (20) comporte un réflecteur (44) qui reçoit la fraction entrante du rayon laser (16).

21. Détecteur d'intensité selon la revendication 20, caractérisé par le fait que le réflecteur (44) présente des surfaces (48) de réflecteur agencées sous forme de cône.

22. Détecteur d'intensité selon l'une des revendications 4 à 21, caractérisé par le fait que le matériau de détecteur (26) et la structure de support (22) sont réalisés en une même matière.

23. Détecteur d'intensité selon l'une des revendications précédentes, caractérisé par le fait que le matériau de détecteur (26) est un matériau céramique.

24. Détecteur d'intensité selon la revendication 23, caractérisé par le fait que le matériau céramique est une céramique poreuse.
